# EUROPEAN PATENT SPECIFICATION

(11) **EP 4 013 809 B1**
(45) Date of publication and mention of the grant of the patent: **19.07.2023**
(21) Application number: 20742720.4
(22) Date of filing: 17.07.2020
(51) Int. Cl.: C08J 9/00, C08L 23/12, C08J 9/14

(54) **USE OF A COMPOSITION FOR THE MANUFACTURE OF A FOAMED ARTICLE**
VERWENDUNG EINER ZUSAMMENSETZUNG ZUR HERSTELLUNG EINES GESCHÄUMTEN ARTIKELS
UTILISATION D'UNE COMPOSITION POUR LA FABRICATION D'UN ARTICLE EN MOUSSE

(30) Priority: 18.08.2019 EP 19192192
(43) Date of publication of application: 22.06.2022
(73) Proprietor: SABIC Global Technologies, B.V., 4612 PX Bergen op Zoom (NL)
(72) Inventor: DUCHATEAU, Robbert, 6160 GA Geleen (NL); BOUYAHYI, Miloud, 6160 GA Geleen (NL); JASINSKA-WALC, Lidia, 6160 GA Geleen (NL)
(74) Representative: Sabic Intellectual Property Group
(86) International application number: PCT/EP2020/070266
(87) International publication number: WO 2021/032378

(56) References cited:
- WO-A1-2016/188817
- WO-A1-2016/188818
- US-A1- 2015 361 237

## Description

The present invention relates to the use of a polypropylene composition for the manufacture of a foamed article. The present invention further relates to a method for the manufacture of a foamed article and to a composition suitable to be foamed.

Foaming of polyolefins is known in the art and may be accomplished by bringing the composition into a molten state and foaming the melt using either a physical or a chemical foaming agent. It is of high importance that the molten composition has a certain threshold melt strength, because otherwise the foaming agent may diffuse out of the composition easily and/or the formed cells may collapse. In addition if there is insufficient melt strength then formation of stable foams may not be possible at all. Increasing the melt strength of polymers may be accomplished by introducing a certain amount of branching in the polymers and/or by (partially) crosslinking the polymers prior to foaming.

Thus, it is known in the art to use polypropylene with long chain branching in order to increase the melt strength of polypropylene allowing the polypropylene to be foamed and/or to obtain a closed cell foam. The manufacture of long chain branched polypropylene is however more complex than the manufacture of standard linear polypropylene.

CN104072878 discloses a polypropylene composition for the manufacture of a foam. The composition disclosed in that reference comprises 40 - 80 parts of atactic propylene copolymer, 15 - 30 parts high density polyethylene (HDPE), 15 - 25 parts low density polyethylene (LDPE), 4-12 parts of a foaming agent and 0.5 - 2 parts of a crosslinking agent.

US 2015/0361237 discloses a polyolefin resin molded product comprising a base which comprises at least one kind of polypropylene resin having a crystallisation temperature of 112° C. to 150° C, low density polyethylene, an inorganic filler, and an olefin polymer comprising 2 wt.% to 10 wt.% of a reactive functional group bonded to a main chain or an end thereof and having a diameter of 0.5 µm to 200 µm, wherein the base includes foam cells having an average diameter of 20 µm to 50 µm distributed thereon. The olefin polymer exemplified in this reference is maleic anhydride functionalised polypropylene and this material used to improve the dispersion of the inorganic filler.

Low density polyethylene (LDPE) is a type of polyethylene with a relatively high amount of long chain branches, which means that LDPE inherently has a relatively high melt strength. On the other hand polypropylene as such is generally a linear polymer with a relatively low melt strength and accordingly the foaming of polypropylene, in particular the foaming of polypropylene so as to obtain a closed cell foam is not straightforward. The terms "low density polyethylene" and LDPE are used interchangeably in the description below.

Accordingly, it is an object of the invention to provide for a polypropylene based composition that can be used for the manufacture of foamed article, in particular closed cell foamed articles.

Surprisingly, the present inventors found that a composition containing polypropylene as a major component and LDPE as a minor component, wherein the LDPE and polypropylene are compatibilised with a specific compatibiliser shows an increased melt strength. Accordingly the present inventors further found that such compositions can be foamed to foamed articles having predominantly closed cells.

Accordingly, the present invention relates to the use of a composition comprising
- 60 - 98 wt.% of polypropylene
- 2 - 40 wt.% of low density polyethylene
- 0.1 - 10 wt.% of compatibiliser
   wherein
- the compatibiliser is a BAB or AB type of block copolymer comprising a polypropylene block A and a polyester block B, or wherein the compatibiliser is a graft copolymer of the type ABn having a polypropylene backbone A and polyester block(s) B grafted thereon, with n being at least 1, and
- the polyester block(s) B have an average M/F ratio from 8 - 32, wherein M is the number of backbone carbon atoms in the polyester not including carbonyl carbon atoms, and F is the number of ester groups in the polyester block(s),
- wherein the wt.% is based on the sum of the amount polypropylene, low density polyethylene and compatibiliser,
for the manufacture of a foamed article.

### Polypropylene

In principle any type of polypropylene may be used in the present invention and accordingly the polypropylene may be one or more of
- a propylene homopolymer,
- a propylene - α-olefin random copolymer, preferably a propylene ethylene or a propylene C₄ - C₈ α-olefin random copolymer with up to 5 wt.%, preferably up to 3 wt.%, of ethylene and/or at least one C₄ - C₈ α-olefin based on the weight of the copolymer
- a propylene - α-olefin block copolymer, preferably a propylene ethylene or a propylene C₄ - C₈ α-olefin block copolymer
- a hetero-phasic polypropylene copolymer comprising a matrix phase and a dispersed phase, the matrix phase consisting of a propylene homopolymer and/or a propylene random copolymer with up to 5 wt.%, preferably up to 3 wt.%, of ethylene and/or at least one C₄ - C₈ α-olefin, the wt.% being based on the matrix phase, and the dispersed phase consisting of a random ethylene - C₃ - C₈ α-olefin, preferably random ethylenepropylene copolymer.

Mixtures of at least two of the aforementioned polypropylene materials may also be used, including mixtures of two or more of polypropylene materials of the same type, such as a mixture of two polypropylene homopolymers.

Isotactic polypropylene is preferred. In the context of the present invention the polypropylene is preferably not atactic.

If the polypropylene is a hetero-phasic copolymer it is preferred that the matrix phase is a propylene homopolymer and/or a propylene - ethylene random copolymer with up to 3 wt.% of ethylene and further that the dispersed phase is an ethylene propylene copolymer with from 20 - 65 wt.% of ethylene, the wt.% based on the dispersed phase. The amount of dispersed phase may be from 5 - 40 such as from 15-30 wt.% based on the weight of the heterophasic copolymer.

It is preferred that the polypropylene does not contain or consist of heterophasic polypropylene.

The polypropylene is preferably a propylene homopolymer or a random propylene and ethylene or C₄-C₈ alpha olefin copolymer containing at most 5 wt.%, preferably at most 3 wt.% on the basis of the weight of the polypropylene, of said ethylene or C₄ - C₈ alpha olefin. Preferably the random copolymer is a propylene - ethylene random copolymer with up to 5 wt.%, preferably up to 3 wt.% of ethylene based on the weight of the random copolymer.

The amount of polypropylene in the composition is at least 70 wt.%, preferably at least 75% wt.%. The amount of polypropylene may be at least 80 wt.%. The amount of polypropylene is at most 98 wt.%, preferably at most 95 wt.%, or 90 wt.%. The amount of polypropylene may be from 70 - 95, from 75 - 90 wt.% based on the sum of the amount of polypropylene, low density polyethylene and compatibiliser.

The melt flow rate of the polypropylene may vary depending on the composition and the requirements of the final product and is generally from 0.1 - 60 g/ 1 0min as measured in accordance with ISO 1133 (2.16 kg, 230°C). Preferably however the melt flow rate of the polypropylene is from 0.1 - 20 g/10. More preferably, the melt flow rate is from 0.5 to 10 g/10 min or 1 - 5 g/10min.

### Low density polyethylene (LDPE)

The LDPE in the composition as disclosed herein may be manufactured using known processes, including for example autoclave high pressure technology and tubular reactor technology. Typical production processes for the manufacture of LDPE are summarised in Handbook of Polyethylene by Andrew Peacock (2000; Dekker; ISBN 0824795466) at pages 43-66.

Low density polyethylene (LDPE) in the context of the present invention means a low density polyethylene having a density from 0.910 - 0.930 g/cm³, preferably from 0.915 - 0.925 g/cm³ (measured for example according to ISO 1183).

The melt flow rate of the LDPE is preferably from 0.1 - 15 g/10 min, preferably from 3 - 9 g/10 min, more preferably from 4 - 8 g/10 min, as determined in accordance with ISO 1133 (190°C, 2.16 kg). A too high melt flow rate is not desirable, because that will reduce the melt strength. A too low melt flow rate is also not desirable for the reason that processing of the material may become cumbersome and the mixing with polypropylene may be less effective.

The amount of LDPE is from 2 - 40 wt.%, preferably from 5 - 30 wt.%, more preferably from 5 - 25 wt.%, even more preferably from 10 - 24 wt.%. based on the sum of the amount of polypropylene, low density polyethylene and compatibiliser.

LDPE is a well-known and commercially available material.

### Compatibiliser

The compatibiliser of the composition disclosed herein is a BAB or AB type of block copolymer comprising a polypropylene block A and a polyester block B, or a graft copolymer of the type ABn having a polypropylene backbone A and polyester block(s) B grafted thereon, with n being at least 1.

For the graft copolymers the backbone may be considered as the polypropylene block. The amount of grafts per 1000 main chain carbon atoms may be for example from 1 - 10, preferably 1 - 5. The number of grafts may not be too high because otherwise the polypropylene backbone will not interact sufficiently with the polypropylene phase.

In an embodiment where a block copolymer contains two or more B (i.e. polyester) blocks these B blocks may be the same or different in length, i.e. may have the same or different molecular weight, depending on the conditions of the process to manufacture the block copolymer.

The weight average molecular weight of the compatibiliser may be from 5,000 to 300,000 g/mol, preferably from 60,000 to 250,000 g/mol, said weight average molecular weight being determined as the polyethylene-equivalent molecular weight by high temperature size exclusion chromatography performed at 150°C in o-dichlorobenzene using polystyrene as standard.

The amount of compatibiliser is from 0.1 - 10 wt.% such as from 0.5 - 10 wt.%, or 2 - 10 wt.% or 3 - 8 wt.% or preferably 4 - 7 wt.%.

The blocks or grafts B are polyester blocks with an M/F ratio of from 8 - 32 with M being the number of carbon atoms in the polyester not including the carbonyl carbon atom and F the amount of ester in the polyester. The value of M only applies to carbon atoms and not to any other heteroatoms that may be in the chain between ester functionalities. Likewise the number M represents only the backbone carbon atoms and not any side groups. In case of aliphatic or aromatic ring structures, such as in particular C₆ aromatic (phenyl) groups, the number of carbon atoms is the shortest number to go from one side of the ring to the other. Thus, by way of example the amount of carbon atoms for a phenyl group is to be counted as 3 and not 6.

Preferably the M/F ratio is at least 10, such as from 10 - 32. It is preferred that the M/F ratio is from 12- 24, even further preferably from 14 - 20. The M/F ratio is typically a numerical average. Accordingly, when two or more esters/lactones are used in the polyester, the average M/F ratio may be obtained by calculating the M/F ratio for each ester/lactone and then calculating the average of the values obtained for the different esters/lactones. The M/F ratio may be determined by NMR, especially by adding the integrations corresponding to backbone carbon atoms and dividing the result by the added integrations corresponding to the carbon atoms of the ester functions.

### Polyester Block

The compatibiliser may contain one or more polyester blocks, which are preferably nonaromatic meaning that the blocks do not contain any aromatic rings. The backbone of the polyester is preferably saturated meaning it does not contain any double bonds. It is preferred that the backbone of the polyester is aliphatic. The backbone of the polyester may comprise short, linear or branched, aliphatic branches such as methyl, ethyl, propyl, butyl, pentyl or hexyl branches. The backbone may also contain one or more heteroatoms such as oxygen, nitrogen or sulphur. For the avoidance of doubt, such heteroatoms are not counted when determining the number M for calculating the M/F ratio. It is preferred that the backbone of the polyester is for example based on methylene units, i.e. that the ester groups are linked via unbranched aliphatic groups.

The polyester of the polyester block(s) may be a polyester homopolymer or a polyester copolymer composed for example of different monomers, i.e. different diols, diacids, hydroxyacids, lactones also including for example dilactones and/or oligolactones, the combination of epoxides and anhydrides and/or CO₂, or (cyclic) carbonates which can be either aliphatic or aromatic. Instead of diacids and/or hydroxyacids, their corresponding diesters and/or hydroxyesters, especially for example dimethyl esters and hydroxymethylester, respectively, can be used to form the polyesters, especially by transesterification, as well.

A polyester of the polyester block(s) according to the invention may thereby also be a polyester-ether, which may comprise both ester and ether functionalities, or an polyester-carbonate, which may comprise both carboxylic acid ester functionalities and carbonylic acid ester (carbonate) functionalities.

The polyester may be a polyester homopolymer or a polyester copolymer. If the polyester is a polyester copolymer then the number of backbone carbon atoms between two neighbouring ester groups in the backbone is preferably randomly distributed over the polyester. Furthermore the number of backbone carbon atoms (M) between ester functionalities in polyester copolymers is preferably at least 8, more preferably at least 10, or at least 12.

Typical examples of polyester homopolymers include the homopolymers obtainable by the ring opening polymerisation of dodecalactone, tridecanolactone, tetradecalactone, pentadecalactone, hexadecalactone, heptadecalactone, octadecalactone, nonadecalactone, ambrettolide, globalide and cyclic ethylene brassylate. In other words typical examples of polyester homopolymers include polydodecalactone, polytridecanolactone, polytetradecalactone, polypentadecalactone, polyhexadecalactone, polyheptadecalactone, polyoctadecalactone, polynonadecalactone, polyambrettolide, polyglobalide.

Typical examples of polyester copolymers include copolymers of at least two lactones from a group including dodecalactone, tridecanolactone, tetradecalactone, pentadecalactone, hexadecalactone, heptadecalactone, octadecalactone, nonadecalactone, ambrettolide, globalide, valerolactone, caprolactone, massoia lactone, δ-decalactone, ε-decalactone, 13-hexyloxacyclotridec10-en-2-one, 13-hexyloxacyclotridecan-2-one.

Other typical examples of polyester copolymers include AABB type copolyesters prepared of a combination of C₂-C₃₀ diols and C₂-C₃₂ diacids provided the polyester copolymer has an average M/F of at least 10, with preferred ranges as disclosed herein.

Diols include, but are not limited to, ethylene glycol, propane-1,3-diol, butane-1,4-diol, pentane-1,5-diol, hexane-1,6-diol, heptane-1,7-diol, octane-1,8-diol, nonane-1,9-diol, decane-1,10-diol, undecane-1,11-diol, dodecane-1,12-diol, tridecane-1,13-diol, tetradecane-1,14-diol, epntadecane-1,15-diol, hexadecane-1,16-diol, heptadecane-1,17-diol, octadecane-1,18-diol, nonadecane-1,19-diol, icosane-1,20-diol, henicosane-1,21-diol, docosane-1,22-diol, tricosane-1,23-diol, tetracosane-1,24-diol, pentacosane-1,25-diol, hexacosane-1,26-diol, heptacosane-1,27-diol, octacosane-1,28-diol, nonacosane-1,29-diol, triacontane-1,30-diol as well as their unsaturated and branched analogues.

Diacids include, but are not limited to oxalic acid, malonic acid, succinic acid, glutaric acid, adipic acid, heptanedioic acid, octanedioic acid, nonanedioic acid, decanedioic acid, undecandedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, icosanedioic acid, henicosanedioic acid, docosanedioic acid, trocosanedioic acid, tetracosanedioic acid, pentacosanedioic acid, hexacosanedioic acid, heptacosanedioic acid, octacosanedioic acid, nonacosanedioic acid, triacontanedioic acid and their unsaturated and branched analogues. The diols and diacids might also contain a heteroatom in the main chain like an oxygen, nitrogen or sulfur, for example 1,5-dioxapan-2-one.

Cyclic carbonic acid esters can also be used as monomer or as comonomer in combination with lactones, dilactones, hydroxyl acids, hydroxyacid esters or diols plus dicarboxylic acids or a combination of these monomers to form polycarbonates or poly(ester-co-carbonate)s with an average M/F of 10 or larger, with preferred ranges as disclosed herein. Examples of cyclic carbonic acid esters are trimethylene carbonate and decamethylene carbonate.

Instead of a combination of one or more diol and diacid, cyclic dilactones can also be added to produce AABB copolyesters with the desired M/F, which is 10 or higher with preferred ranges as disclosed herein. Typical examples of cyclic dilactones are: ethylene adipate, ethylene brassylate, butylene adipate.

Another type of polyester copolymers include AB/AABB copolyesters which can for example be prepared of a combination of lactones and/or hydroxyacids and dilactones and/or the combination of C₂-C₃₀ diols and C₂-C₃₂ diacids and/or a combination epoxides and anhydrides, which result in polyesters having an average M/F (as defined herein) of from at least 10 with preferred ranges as disclosed herein.

Preferably the polyester or copolyester is selected from polytetradecalactone, polypentadecalactone, polyhexadecalactone, poly(caprolactone-co-pentadecalactone), poly(ε-decalactone-*co*-pentadecalactone), polyethylene brassylate-copentadecalactone), poly[ethylene-1,19-nonadecanedioate], poly[ethylene-1,23-tricosanedioate], poly[propylene-1,19-nonadecanedioate], poly[propylene-1,23-tricosanedioate], poly[1,4-butadiyl-1,19-nonadecanedioate], poly[1,4-butadiyl-1,23-tricosanedioate], poly[1 ,6-hexadiyl-1,19-nonadecanedioate], poly[1,6-hexadiyl-1,23-tricosanedioate], poly[1,19-nonadecadiyl-1,19-nonadecanedioate], poly[1,19-nonadecadiyl-1,23-tricosanedioate], poly[1,23-tricosadiyl-1,19-nonadecanedioate], poly[1,23-tricosadiyl-1,23-tricosanedioate], poly[1,20-icosadiyl-1,20-icosa-nedioate], poly[1,6-hexadiyl-1,20-icosenedionate], poly[propylene-1,20-icosanedionate]. More in general the polyester or copolyester is of general structure 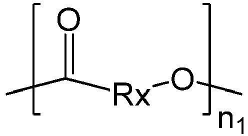 wherein
Rx is an organic group, preferably an aliphatic group having an average chain length of at least 10 carbon atoms and n1 is the number of repeating units, which generally is at least 25, such as at least 50, such as at least 100. Practical maximum number of repeating units can be 2000 or 1000.

Organic group Rx is a branched or straight hydrocarbon group optionally containing one or more heteroatoms provided that the atom neighboring the -O- is a carbon atom, i.e. not a heteroatom. Rx may contain one or more unsaturations, like -C=C-. Preferably Rx is a branched or straight hydrocarbon group, more preferably Rx is a branched or straight aliphatic group. Rx is preferably a saturated aliphatic group. In that respect the term chain length as used herein refers to the shortest number of atoms between two ester functionalities (O=)C-O-. Hence the "chain length" does not include any optional branches or side groups. For example, if Rx is (C₄H₈) the chain length is four. Similarly, if Rx is CH₂-C(CH₃)₂-CH₂-CH₂ the chain length is also four. In the general formula above Rx may be the same or different throughout the polyester provided the average chain length is at least 10 carbon atoms. The following general (co)polyester structures can be considered, which structures are to be considered as more detailed embodiments of the general structure provided above:

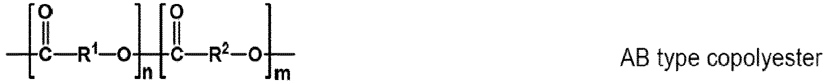

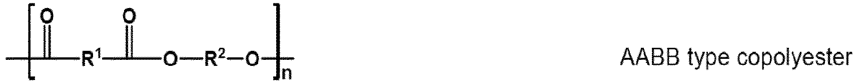

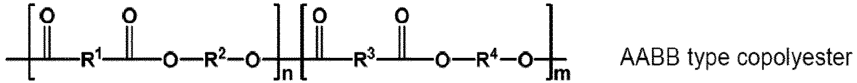

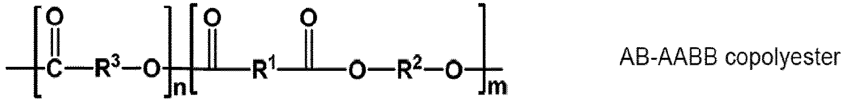

The chain lengths of R¹, R², R³ and R⁴ are selected such that for the polyester the M/F ratio is at least 8, preferably at least 10 with preferred ranges as disclosed herein. The description for Rx above also applies for R¹-R⁴.

The M/F ratio should not be too high as otherwise the polyester may be absorbed to a large extent by the polyethylene phase leaving less polyester available to serve as compatibiliser at the interface of the polyethylene and polypropylene phases.

Accordingly the M/F ratio is at most 32. Hence the M/F ratio is preferably from 10 - 32, more preferably from 12 - 24.

The molecular weight of the polyester may vary and is generally selected such that a material is obtained that can be blended with the polyethylene relatively easily.

The number average molecular weight of the polyester is preferably from 5,000 to 250,000 g/mol, more preferably from 10,000 to 100,000 g/mol, said number average molecular weight being determined as the polyethylene-equivalent molecular weight by high temperature size exclusion chromatography performed at 150°C in dichlorobenzene using polyethylene as standard.

The polyester may be manufactured by various methods known in the art including enzymatic ring-opening polymerisation, catalytic ring-opening polymerisation using organic catalysts, anionic ring-opening polymerisation and catalytic ring-opening polymerisation using metal-based catalysts, ADMET (acyclic diene metathesis) or ROMP (ring-opening metathesis) of ester containing dienes or unsaturated cyclic esters, respectively or polycondensation. Enzymatic ring-opening polymerization of cyclic esters, in particular macrolactones (lactones with a ring size larger than 10 atoms) has proven to be a very efficient process.

For example Novozyme 435, containing supported *Candida Antarctica* lipase B can polymerise pentadecalactone within 2 h at 70 °C with over 90% conversion to high molecular weight (*M*n 86,000 g/mol) polypentadecalactone (Bisht, K. S.; Henderson, L.A.; Gross, R. A.; Kaplan, D. L.; Swift, G. Macromolecules 1997, 30, 2705-2711; Kumar, A.; Kalra, B.; Dekhterman, A.; Gross, R. A. Macromolecules 2000, 33, 6303-6309). Supported *Humicola insolenscutinase* gave comparable results for pentadecalactone polymerization (Hunson, M.; Abul, A.; Xie, W.; Gross, R. Biomacromolecules 2008, 9,518-522).

Organic catalysts such as 1,5,7-triazabicyclo[4.4.0]dec-5-ene (TBD) selectively ring-open lactones and macrolactones such as pentadecalactone to the corresponding homo and copolymers. Although the conversions are high, in all reported cases the obtained molecular weights of the products remain relatively low (Bouyahyi, M.; Pepels, M. P. F.; Heise, A.; Duchateau, R. Macromolecules 2012, 45, 3356-3366).

The most well-known route to produce high molecular weight polymacrolactones and lactone-macrolactone copolymers is by anionic or catalytic ring-opening polymerization using metal-based catalysts. A wide variety of catalysts have been applied. Aluminum salen (WO 2012/065711, van der Meulen, I.; Gubbels, E.; Huijser, S.; Sablong, R.; Koning, C. E.; heise, A.; Duchateau, R. Macromolecules 2011, 44, 4301-4305) and zinc phenoxyimine (WO 2014/188344; Bouyahyi, M.; Duchateau, R. Macromolecules 2014, 47, 517-524; Jasinska-Walc, L.; Hansen, M. R.; Dudenko, D.; Rozanski, A.; Bouyahyi, M.; Wagner, M.; Graf, R.; Duchateau, R. Polym. Chem. 2014, 5, 3306-3320) catalysts are among the most active catalysts known for the ring-opening polymerization of macrolactones producing high molecular weight homo- and copolymers. Besides discrete catalysts consisting of a complex ancillary ligand system, simple metal alkoxides can also be applied. For example KOtBu and Mg(BHT)₂THF₂ proved to be potent catalysts/initiators for the ring-opening polymerization of lactones and macrolactones (Jedli 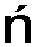 ski, Z.; Juzwa, M.; Adamus, G.; Kowalczuk, M.; Montaudo, M. *Macromol. Chem. Phys.* **1996,** 197, 2923-2929; Wilson, J. A.; Hopkins, S. A.; Wright, P. M.; Dove, A. P. Polym. Chem. 2014, 5, 2691-2694; Wilson, J. A.; Hopkins, S. A.; Wright, P. M.; Dove, P. Macromolecules 2015, 48, 950-958).

ADMET and ROMP are interesting methodologies to produce polyesters with high M/F values. The difference between ADMET and ROMP is that the first is a step growth process whereas the latter is a chain growth process. Though, but methods have resulted in polyesters with a significantly high molecular weight. The disadvantage of olefin metathesis is that to obtain the final saturated product, a hydrogenation step is necessary. The process is also rather costly (Fokou, P. A.; Meier, M. A. R. Macromol. Rapid. Commun. 2010, 31, 368-373; Vilela, C.; Silvestre, A. J. D.; Meier, M. A. R. Macromol.Chem. Phys. 2012, 213, 2220-2227; Pepels, M. P. F.; Hansen, M. R.; Goossens, H.; Duchateau, R. Macromolecules 2013, 46, 7668-7677).

Polycondensation of ω-hydroxy fatty acids or ω-hydroxy fatty acid esters has been reported using either enzymes or metal-based catalysts. For example *Candida Antarctica* lipase B (Novozyme 435) polymerises ω-hydroxy fatty acids, such as 12-hydroxydodecanoic acid, albeit that degrees of polymerization remain rather low (Mahapatro, A.; Kumar, A.; Gross, R. A. Biomacromolecules 2004, 5, 62-68). The same enzyme was also used to copolymerise fatty acid-based diacids with diols to moderately high molecular weight polyesters (Yang, X.; Lu, W.; Zhang, X.; Xie, W.; Cai, M.; Gross, R. A. Biomacromolecules 2010, 11, 259-268). The titanium-catalyzed polycondensation of ω-hydroxy fatty acid esters proved to be highly efficient resulting in high molecular weight polyesters (Liu, C.; Liu, F.; Cai, J.; Xie, W.; Long, T. E.; Turner, S. R.; Lyons, A.; Gross, R. A. Biomacromolecules 2011, 12, 3291-3298). Methods for making polyesters suitable for application in the present invention are further disclosed for example in WO 2012/065711, WO 2014/203209, WO 2014/147546, the contents of which are incorporated herein by reference.

### Polypropylene block

The polypropylene block of the compatibiliser and/or the backbone of the graft copolymer is preferably a propylene homopolymer or a random propylene ethylene or C₄ - C₈ alpha olefin copolymer, containing at most 5 wt.%, preferably at most 4 wt.% on the basis of the weight of the backbone, of ethylene or C₄ - C₈ alpha olefin.

The amount of comonomers in the propylene copolymer should be limited so as to maintain a certain degree of crystallinity, which is desirable for good mechanical properties of the final foam product. Accordingly, it is preferred that the polypropylene block or backbone is a semi-crystalline propylene homopolymer block. In other words, the polypropylene block or backbone is preferably an isotactic polypropylene. For the avoidance of doubt it is noted that the polypropylene block is not atactic.

### Method of manufacture: block copolymer

Block copolymers can be manufactured for example by a three-step method.

In a first step a propylene, and optionally another olefinic comonomer is/are polymerised using a catalyst system to obtain a first polypropylene block containing a main group metal on at least one chain end; the catalyst system comprising:
i) a metal catalyst or metal catalyst precursor comprising a metal from Group 3-10 of the IUPAC Periodic Table of elements; and
ii) at least one type of chain transfer agent; and
iii) optionally a co-catalyst;

Thus, in the first step a polypropylene homopolymer or copolymer is prepared by means of coordinative chain transfer polymerisation (CCTP) in the presence of a catalyst, cocatalyst, at least one type of chain transfer agent and optionally an additional chain shuttling agent. Chain transfer and/or chain shuttling agents used are typically for example aluminium-, boron- and/or zinc hydrocarbyl species. This process results in polypropylene chains that are end-functionalised with a metal atom, which is susceptible to react with an oxidizing agent such as oxygen.

In a second step the first polypropylene block containing a main group metal on at least one chain end obtained in in the first step may be reacted with at least one type of oxidizing agent and/or subsequently at least one type of metal substituting agent to obtain a first polypropylene block containing at least one functionalised chain end. Preferably the functionalised chain end comprises a hydroxyl group or a carboxylic acid group.

Thus, during the second step the product obtained from the first step may be treated for example with oxygen, as oxidizing agent, optionally followed by a protic agent, such as acidified alcohol as a metal substituting agent, to remove the metal affording a hydroxyl end-functionalised polypropylene product.

In a third step at least one second polymer block is formed on the first polypropylene block, wherein as an initiator the functionalised chain end of the first polypropylene block obtained in the second step may be used to obtain the block copolymer. Thus, in the third step the product of the second step may be used as a macro-initiator for the formation of the diblock copolymer.

Alternatively, the third step mentioned above can also be performed with preformed or otherwise obtained polypropylenes preferably for example with a functionalised chain end that can be used as a macro-initiator to obtain the second polymer block. In such a case, the first and/or second steps are optional.

The third step can be performed for example by transesterification of a preformed transesterifiable polymer, especially for example a preformed polyester and/or by the ring-opening polymerisation (ROP) of lactones, including by way of example the ROP of mono-lactones, dilactones and/or oligolactones.

In the context of the invention the transesterifiable polymer is the polyester.

During the third step, ROP of lactones and/or transesterification for example with a preformed transesterifiable polymer, especially for example a preformed polyester is carried out in the presence of the hydroxyl chain-end functionalised polypropylene product during the second step and a suitable ROP and/or transesterification catalyst. The third step may be carried out in hydrocarbon solvent, especially an aromatic hydrocarbon solvent. Alternatively and in particular for transesterification the third step can be carried out the melt such as for example by means of reactive extrusion.

The steps described above can be performed in a cascade-like process for example either in the same or in subsequent/connected reactors or vessels, preferably without additional intermediary and/or workup and/or drying and/or purification steps, even more preferred continuously. In a cascade-like process, the polymer preparation can also be carried out for example without a metal-substitution step, especially without a hydrolysis step. It should be noted that an extruder can also be considered as a reactor in the context of the present invention.

### Method of manufacture: graft copolymer

The graft copolymer, i.e. the copolymer wherein polyester blocks are grafted on or from a polypropylene backbone, can be manufactured for example by a three-step method. In a first step propylene, and at least one second type of metal-pacified functionalised olefin monomer, preferably propylene, are copolymerised using a catalyst system to obtain a polypropylene main chain having one or multiple metal-pacified functionalised short chain branches, the catalyst system comprising:
i) a metal catalyst or metal catalyst precursor comprising a metal from Group 3-10 of the IUPAC Periodic Table of elements;
ii) optionally a co-catalyst and/or scavenger;
iii) optionally a chain transfer agent

Thus in the first step propylene and optionally ethylene or a C₄-C₈ alpha olefin is copolymerised using for example a pacified hydroxyl or acid functionalised olefin comonomer in the presence of a catalyst and a cocatalyst, similarly as any other catalytic olefin copolymerisation, with the difference that the hydroxyl-functionalised or acid-functionalised olefinic comonomer is pacified by reacting it with a metal hydrocarbyl, especially for example an aluminium alkyl such as for example TiBA, prior and/or during to the copolymerisation.

In a second optional step the polypropylene main chain having one or multiple metal-pacified functionalised short chain branches so obtained is reacted with at least one metal substituting agent to obtain a polypropylene main chain having one or multiple functionalised short chain branches; Preferably the functionalised chain end comprises a hydroxyl group or a carboxylic acid group.

Thus, during the second step, the protective group may be removed by treating the product with a protic agent such as acidified alcohol, as metal substituting agent. The product of the second is a random copolymer of propylene and a hydroxyl-functionalised or acid-functionalised olefin, where the hydroxyl or acid functionalities may be located on the short chain branches, especially for example at their ends. As noted, a minor amount, of ethylene or C₄-C₈ alpha olefin may be present during the polymerisation. Preferably only propylene is used. In a third step one or more polymer grafts are formed on the polypropylene main chain, wherein as initiators the functionalised short chain branches on the polypropylene main chain obtained in the second step can be used to obtain the graft copolymer. This step can be performed for example by transesterification of a preformed transesterifiable polymer, especially for example a preformed polyester and/or by ROP of lactones, also including for example dilactones and/or oligolactones, and/or cyclic carbonates and/or a combination of epoxides and anhydrides and/or CO₂. This third step is essentially similar to the third step disclosed herein for the manufacture of block copolymers.

Thus, the product of the second step may subsequently be used in the third step as a macro-initiator for the formation of graft copolymer.

Alternatively, the third step can be performed with preformed or otherwise obtained polypropylenes with at least one, preferably at least two or more pending functionalities.

During the third step ROP of lactones or transesterification for example with a preformed transesterifiable polyester is carried out in the presence of the random copolymer of propylene and hydroxyl-functionalised olefins obtained in the second step and a ROP and/or transesterification catalyst. The third step can be carried out in a hydrocarbon solvent, especially an aromatic hydrocarbon solvent. Alternatively and in particular for transesterification the third step can be carried out the melt such as for example by means of reactive extrusion.

The steps described above can be performed in a cascade-like process for example either in the same or in subsequent/connected reactors or vessels, preferably without additional intermediary and/or workup and/or drying and/or purification steps, even more preferred continuously. In a cascade-like process, the polymer preparation can also be carried out for example without a metal-substitution step, especially without a hydrolysis step. It should be noted that an extruder can also be considered as a reactor in the context of the present invention.

The amount of compatibiliser in the composition is from 0.1 - 10 wt.%, preferably from 0.5 - 10 wt.%, especially from 1 - 8 wt.% or particularly from 4 - 7 wt.% on the basis of the sum of the amount of polypropylene, low density polyethylene and compatibiliser.

### Composition

The present inventors found that polyester blocks having an average M/F ratio is between 8 and 32, with the preferred ranges as disclosed herein, are at least partially miscible with LDPE. The present inventors also confirm that the polypropylene block(s) or backbone interacts with the polypropylenes, as expected. Accordingly, the present inventors found that a block or graft copolymer as herein acts as a compatibiliser in a blend of a polypropylene and a LDPE and further observed that the properties of the polypropylene - LDPE blends are improved by addition of a relatively small amount of the compatibiliser as herein defined, especially regarding their foamability and/or the ability to get closed cell foams.

### Further components

The composition disclosed herein may contain further components common in the art such as flame retardants, fillers such as mineral fillers like talc, reinforcing agents like glass fibres or carbon fibres, colorants such as pigments or dyes, UV stabilisers, antioxidants, mould release agents. The amount of such additives is at most 5 parts per 100 parts by weight of polypropylene, LDPE and compatibiliser.

### Foam

The composition as disclosed herein may be used to manufacture foams with closed cells. The amount of closed cells of the foam can thereby be measured for example according ASTM D2856. For closed cell foams in the sense of the invention, the amount of closed cells may be from 25 - 100 %, preferably from 30 - 99%, more preferably from 40 - 98 %. Foams with an amount of closed cells of at least 50, 60 or 70% are even more preferred with foams having at least 80% closed cells being most preferred for providing lightweight materials combining low permeability, good insulation values and good mechanical properties. Ideally, the amount of closed cells is at least 90%.

The foam may be manufactured using known techniques and using known foaming agents. In that respect a distinction needs to be made between a physical foaming agent and a chemical foaming agent. A physical foaming agent is a foaming agent that is used to generate the foam but in itself is inert to the foaming process, i.e. it does not chemically react. Examples of such foaming agents include low molecular weight organic solvents (like pentane) and gases like nitrogen and carbon dioxide. A chemical foaming agent is a material that upon activation, usually by heat, undergoes a chemical reaction thereby generating gases that allow expansion of the material in which the foaming agent is contained. Examples of such materials are known to a skilled person and include for example azo-dicarbonamide.

The viscosities of the LDPE and the polypropylene at the conditions under which the composition is formed, such as temperature and shear rate, preferably do not differ too much.

In order to improve compatibilisation it is preferred that the compatibiliser is pre-mixed either or both with the LDPE and the polypropylene prior to combining the LDPE with the polypropylene. Accordingly, a method of manufacture of the foam may comprise the steps of
- preparing a blend of polypropylene and the compatibiliser,
- melt mixing the blend with LDPE
- foaming the so obtained composition,
   or
- preparing a blend of LDPE and the compatibiliser,
- melt mixing the blend with polypropylene
- foaming the so obtained composition.
   or
- preparing a blend of LDPE and the compatibiliser,
- preparing a blend of polypropylene and the compatibiliser,
- melt mixing the blends
- foaming the so obtained composition.

The foam based on the composition disclosed herein is a thermoplastic foam. Accordingly the foam can be recycled similar to other thermoplastic materials.

Alternatively, the composition is subjected to a step of physical crosslinking prior to the same being foamed. Such physical crosslinking may be performed by means of radiating the composition with an electron beam.

The foams can have a degree of expansion of from 1.05 - 40, preferably from 5 - 40, more preferably from 10 - 30, wherein the degree of expansion is defined as the ratio between the density of the composition in molded state prior to foaming and the density of the foamed composition after foaming, i.e. the density of the foam.

The present invention also relates to a foamed article comprising or consisting of the composition as disclosed herein and optionally residues of a chemical or physical foaming agent.

The present inventors found that the foam according to the invention has improved adhesion to polar substances or polar substrates as compared to polypropylene foams. Accordingly in an embodiment the present invention also relates to an assembly comprising a foam or foamed article as disclosed herein and a polar substrate, wherein the foam or the article contacts and adheres at least in part to said polar substrate. The assembly can have many forms and substrates may include aluminium, steel, glass, and other polar polymer materials, preferably aluminium, steel and glass. The foams or foamed articles may adhere directly to the substrate. Alternatively the foam or foamed articles are connected to the substrate using an adhesive material.

In yet another embodiment the present invention also relates to a printed or coated article comprising or consisting of the foam or foamed article as disclosed herein and a coating or printing layer covering a surface of the foam or foamed article at least in part. Any coating or printing material, like ink, which is suitable for printing or coating polymer materials may be used.

The present invention also relates to a method for the manufacture of a foamed article comprising the steps of
i) providing a composition comprising
   - 60 - 98 wt.% of polypropylene
   - 2 - 40 wt.% of low density polyethylene
   - 0.1 - 10 wt.% of compatibiliser
wherein
- the compatibiliser is a BAB or AB type of block copolymer comprising a polypropylene block (A) and a polyester block (B), or wherein the compatibiliser is a graft copolymer of the type ABn having a polypropylene backbone (A) and polyester or blocks (B) grafted thereon, with n being at least 1, and
- the polyester block(s) have an average M/F ratio from 8 - 32, wherein M is the number of backbone carbon atoms in the polyester not including carbonyl carbon atoms, and F is the number of ester or carbonate groups in the polyester block(s), wherein the wt.% is based on the sum of the amount polypropylene, low density polyethylene and compatibiliser,
   ii) adding to said composition a physical or chemical foaming agent
   iii) foaming the composition of step ii into a foamed article

All preferred ranges disclosed herein also apply to this method.

The foaming agent may be added to the composition in an extruder and is mixed with the composition in molten state. This specifically applies when a physical foaming agent is used. When a chemical foaming agent is used, the same may be pre-mixed with the composition prior to the same being fed to an extruder or any other melt mixing device.

Also, if a physical foaming agent is used a foam may be directly obtained once the composition is extruded through a suitable die. Extrusion foaming is a technique known to the skilled person.

If the foaming agent is a chemical foaming agent then a foamed article may be obtained by first moulding the composition melt mixed with the foaming agent into a molded unfoamed intermediate article, followed by a step of foaming said intermediate article. The intermediate article may be a sheet obtained by extrusion or it may be an injection moulded article. The intermediate article may be subjected to a step of physical crosslinking using electron beam radiation prior to being foamed.

The present invention further relates to a composition comprising
- 60 - 98 wt.% of polypropylene
- 2 - 40 wt.% of low density polyethylene
- 0.1 - 10 wt.% of compatibiliser
- physical or chemical foaming agent
   wherein
- the compatibiliser is a BAB or AB type of block copolymer comprising a polypropylene block A and a polyester block(s) B, or wherein the compatibiliser is a graft copolymer of the type ABn having a polypropylene backbone A and polyester block(s) B grafted thereon, with n being at least 1, and
- the polyester block(s) B have an average M/F ratio from 8 - 32, wherein M is the number of backbone carbon atoms in the polyester not including carbonyl carbon atoms, and F is the number of ester groups in the polyester block(s),
- wherein the wt.% is based on the sum of the amount polypropylene, low density polyethylene and compatibiliser.

For the sake of completeness it is noted that all preferred ranges and preferred materials disclosed in the context of the use of the composition without the foaming agent also apply to this composition.

### Foam

In an aspect the present invention relates to a foam comprising
60 - 98 wt.% of polypropylene based on the total amount of the foam,
2 - 40 wt.% LDPE based on the total amount of the foam,
2 - 10 wt.% compatibiliser based on the total amount of the foam,
wherein
- the compatibiliser is a BAB or AB type of block copolymer comprising a polypropylene block A and a polyester block(s) B, or wherein the compatibiliser is a graft copolymer of the type ABn having a polypropylene backbone A and polyester block(s) B grafted thereon, with n being at least 1, and having a weight average molecular weight of from 10,000 - 250,000 g/mol.
- the polyester block(s) B have an average M/F ratio from 8 - 32, wherein M is the number of backbone carbon atoms in the polyester not including carbonyl carbon atoms, and F is the number of ester groups in the polyester block(s),
- the polypropylene has a melt flow rate of from 1 -20 (ISO 1133, 2.16 kg, 230°C)
- wherein the wt.% is based on the sum of the amount polypropylene, low density polyethylene and compatibiliser.

The invention will be further elucidated by means of the following non-limiting examples.

### Examples

### Materials

ω-Pentadecalactone (PDL) (98%, Sigma-Aldrich) was dried over CaH₂ and distilled under reduced pressure. Benzyl alcohol (BnOH) (99%, Merck) was dried over CaH₂ (95%, Sigma-Aldrich) and distilled under reduced pressure. Toluene (Sigma-Aldrich) was dried using an MBraun-SPS-800 purification column system. Exxelor PO1020 was purchased from ExxonMobil . Methanol, pentamethyl heptane (from in house purification system) were used as received. Toluene (anhydrous, Sigma-Aldrich) and tetrahydrofuran (THF) (anhydrous, Sigma-Aldrich) were purified using an MBraun-SPS-800 purification column system and were kept in glass bottle with 4-Å molecular sieves under an inert atmosphere. 10-undecen-1-ol, ethanolamine and tin(II) 2-ethylhexanoate were purchased from Sigma Aldrich. Methylaluminoxane (MAO) (30 wt. % solution in toluene) was purchased from Chemtura. Diethyl zinc (DEZ) (1.0 M solution in hexanes), triisobutylaluminum (TiBA) (1.0 M solution in hexanes), di-n-butylmagnesium (MgBu_{2,}1.0 M solution in heptane), and 2,6-di-tert-butyl-4-methylphenol (BHT) (99 %, purum), were purchased from Sigma-Aldrich. N,N'-bis(salicylidene)-2,2-dimethyl-1,3-propanediamine (98%, Sigma-Aldrich), trimethyl aluminum (2.0 M solution in toluene) and triisobutyl aluminum (1.0 M solution in hexanes) were purchased from Sigma Aldrich. *rac*-Me₂Si(2-Me-4-Ph-Ind)₂ZrCl₂ was purchased from MCAT GmbH, Konstanz, Germany.

PP500P is a semi-crystalline propylene homopolymer commercially available from SABIC having a melt flow of 3.1 g/10min (ISO1133, 2.16 kg, 230°C)
PP531P is a semi-crystalline propylene homopolymer commercially available from SABIC having a melt flow rate of 0.30 g/10min (ISO 1133, 2.16 kg, 230°C).

PP520 is a semi-crystalline propylene homopolymer commercially available from SABIC having a melt flow rate of 10.5 g/10min (ISO 1133, 2.16 kg, 230°C).

Daploy WB140, commercially available from Borealis, is a high melt strength propylene homopolymer having a melt flow rate of 2.1 g/10min in accordance with ISO 1133 (230°C and 2.16 kg).

2008TN00 is low density polyethylene having a density of 920 kg/m³ and a melt flow rate of 7.5 g/ 10min (ISO1133, 2.16 kg, 190°C)
ExxelorPO1020, commercially available from ExxonMobil, is a maleic anhydride-grafted propylene homopolymer having a melt flow rate of 430 g/10 min in accordance with ISO 1133 (230°C and 2.16 kg). The amount of grafted maleic anhydride (MAH) is about 0.43 wt.% on the basis of the weight the polymer.

### Measurement methods

Conversion of reactions was determined by NMR:
¹H NMR analysis (¹H-NMR) was carried out at 80-110 °C using deuterated tetrachloroethane (TCE-d₂) as the solvent and recorded in 5 mm tubes on a Varian Mercury spectrometer operating at frequencies of 400 MHz. Chemical shifts in ppm versus TCE-d₂ were determined by reference to the residual solvent signal.

*M*ₙ*, M*_{w} and the polydispersity index (PDI, *Ð*_{M}) were determined as follows by size exclusion chromatography:
SEC measurements were performed at 150°C on a Polymer Char GLDPE-IR^{®} built around an Agilent GC oven model 7890, equipped with an autosampler and the Integrated Detector IR4. 1,2-dichlorobenzene (oDCB) was used as an eluent at a flow rate of 1 mL/min. The SEC-data were processed using Calculations Software GLDPE One^{®}.

Melting (Tm) and crystallization (Tc) temperatures as well as enthalpies of the transitions were measured by differential scanning calorimetry (DSC) using a DSC Q100 from TA Instruments. The measurements were carried out at a heating and cooling rate of 10 °C·min⁻¹ from -60 °C to 210 °C. The transitions were deduced from the second heating and cooling curves.

Density analysis were carried out using PLT-A01 set for density determination for KERN PLT. The foam samples were imersed in water to determine the volume and the mass by weighing it on the balance. The volume determination is based on the Law of Archimedes.

The morphology of foam cell structures were characterised with a JEOL JSM 7800-F Field Emission Scanning Electron Microscopy (FE-SEM) at an operating voltage of 5 kV. A piece of foam sample were cryogenically cut using an ultra sharp razer blade for the cross-sectional morphology characterization. The foam cross section was viewed using the Large Depth of Focus (LDF) mode and the Lower Electron Detector (LED) detector in the FE-SEM. The LDF mode provides a larger depth of focus than conventional SEM mode, and is suitable for imaging of rough samples with micron size features. All the samples were sputter-coated with gold-palladium before SEM imaging in order to reduce the surface charging during imaging.

### Typical procedure for the synthesis of hydroxyl functionalised polypropylene via reactive extrusion (REX):

ExxelorPO1020 with 2500 ppm of antioxidant, Irganox 1010, was introduced into a co-rotating twin-screw extruder under nitrogen atmosphere set with different temperature zones 50-90-160-165-170-170-180-180 °C, respectively. Ethanolamine was added to the extruder in an amount such that the molar ratio of the anhydride groups and the ethanolamine was equal to 1.1 : 1. The mixture was processed and then cooled and granulated. The product was dried in a vacuum oven for 10 h at 70 °C.

### Typical procedure for the synthesis of hydroxyl functionalised polypropylene via catalytic route:

Polymerization experiments were carried out in a stainless steel autoclave with an internal volume of 2.1 L. The reactor is equipped with interMIG stirrer, operated at 900 rpm. Pentamethyl heptane "PMH" (400 mL) was added into the autoclave. Propylene (typically 200 NI/h) was dosed via Brooks Mass flow controller into the headspace and the propylene was set at the desired pressure (9 bar). The temperature was set at 87 °C. Off-gas was continuously vented. Subsequently, the MAO (30 wt.% solution in toluene, 9 mmol) was dosed using the injection vessel with an additional 400 mL of PMH. After stirring the mixture for 15 -20 min at 87 °C, a premixed solution of 10-undecen-1-oland TiBA (TiBA/C11=OH = 1, 0.85 M, 10 mL), DEZ (1M solution in hexane, 1 mL) and TiBA (1M solution in hexane, 4 mL) were introduced into the reactor under a nitrogen atmosphere with PMH through the injection Schlenk vessel. The mixture was stirred for 10 min and a solution of rac-dimethylsilyl bis(2-methyl-4-phenyl-1-indenyl) zirconium dichloride catalyst (6 µmol) in approximately 5 mL of toluene was injected into the reactor applying an over pressure of nitrogen. After dosing all the components, the total volume of the added PMH was 1 L. The reactor temperature was kept at 87 ± 3 °C by cooling with an oil LAUDA system. At the end of the reaction (20 min), the mixture was drawn off via a bottom valve. A mixture of acidified methanol (2.5 % v/v HCl) and Irganox 1010 was added and the resulting suspension was filtered, washed with demineralised water and dried at 60 °C in vacuo overnight.

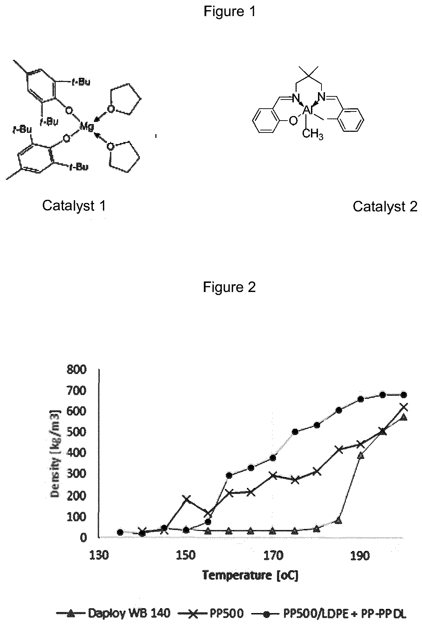

Typical procedure for synthesis of PPDL using catalyst 1. A glass crimp cap vial was charged with toluene (1.0 mL), PDL (0.500 g, 2.08 mmol), benzyl alcohol (0.22 mg, 2.08 µmol) and catalyst 1 (1.26 mg, 2.08 µmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesised copolymer was cooled to room temperature and quenched using acidified methanol, isolated and dried in vacuum at room temperature for 18 h. Table 1 specifies the molecular weight (Mn and Mw) of PPDL. The structure of catalyst 1 is shown in Figure 1.

Typical procedure for synthesis of PPDL using catalyst 2. A glass crimp cap vial was charged with toluene (1.0 mL), PDL (0.500 g, 2.08 mmol), benzyl alcohol (0.22 mg, 2.08 µmol) and catalyst 2 (0.73 mg, 2.08 µmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesized copolymer was cooled to room temperature and quenched using acidified methanol, isolated and dried in vacuum at room temperature for 18 h. Table 2 specifies the reaction molecular weight (Mn and Mw) of PPDL. The structure of catalyst 1 is shown in Figure 2.

### Typical procedure for the synthesis of PP-graft-PPDL via REX:

The experiments were carried out in a co-rotating twin-screw extruder at 40-120-165-170-180-180-180-180-170-155-150 °C with a screw rotation speed of 65 rpm and throughput 3 kg/hr. Hydroxyl-functionalised polypropylene (PP-OH, Mn=36,200 g/mol, Mw=166,000 g/mol, PDI=4.59, 1995g), polypentadecalactone (PPDL, 990g, Mn= 35,100 g/mol, Mw=56,800 g/mol, PDI=1.6) and stannous octoate as catalyst (Sn(Oct)₂, 15g) were fed into the extruder. The process of extrusion was carried out using two feeders. From the first feeder PP-OH and from the second - blend of the other components were dosed. The mixture was processed and then cooled and granulated. The copolymer was dried in a vacuum oven for 10 h at 70 °C.

### Typical procedure for preparation of PP/LDPE blends.

Isotactic polypropylene (iPP) (SABIC PP500P, 800 g, MFI = 10.5 g/10min (230 °C, 2.16kg)), low density polyethylene (LDPE) (SABIC 2008TN00, 200 g, MFI = 7.5 g/10min (190 °C, 2.16kg)) were fed into the extruder chamber. The mixture was processed for 3 minutes at 190°C with a screw rotation rate of 100 rpm. Afterwards the mixture was evacuated directly to a mini-injection molding machine to prepare samples for mechanical properties and morphology analysis. The same procedure was used for the preparation of PP520/LDPE2008TN00, PP531/LDPE2008TN00 blends.

### Typical procedure for preparation of PP/LDPE blends compatibilised by PP-graft-PPDL copolymer.

770 gram of isotactic polypropylene PP500P, 180 gram of LDPE 2008TN00) and 50 gram of the PP-graft-PPDL compatibiliser were fed into an extruder chamber. The mixture was processed for 3 minutes at 190°C with a screw rotation rate of 100 rpm. Afterwards the mixture was evacuated directly to a mini-injection moulding machine to prepare samples for mechanical properties and morphology analysis. The same procedure was used for the preparation of PP520/LDPE2008TN00 and PP531/LDPE2008TN00 blends.

| Table 1 | | | | | | | |
|---|---|---|---|---|---|---|---|
| Entry | Catalyst | *PPDL M*ₙ [kg·mol⁻¹] | PPDL *M*_{w} [kg·mol⁻¹] | PP | LDPE | PP/LDPE [wt%/wt%] | PP-graft-PPDL [wt%] |
| 1 | 1 | 63.1 | 123.8 | PP500P | 2008TN00 | 77/18 | 5 |
| 2 | 1 | 43.5 | 85.6 | PP500P | 2008TN00 | 77/18 | 5 |
| 3 | 1 | 18.2 | 38.6 | PP500P | 2008TN00 | 77/18 | 5 |
| 4 | 1 | 48.1 | 91.9 | PP500P | 2008TN00 | 77/18 | 5 |
| 5 | 1 | 63.5 | 127.6 | PP500P | 2008TN00 | 77/18 | 5 |
| 6 | 1 | 39.9 | 89.5 | PP500P | 2008TN00 | 77/18 | 5 |
| 7 | 1 | 23.3 | 45.8 | PP500P | 2008TN00 | 77/18 | 5 |

The compatibilisers are AB block copolymers.

| Table 2 | | | | | | | |
|---|---|---|---|---|---|---|---|
| Entry | Catalyst | *PPDL, M*ₙ [kg·mol⁻¹] | PPDL, *M*_{w} [kg·mol⁻¹] | PP | LDPE | PP/LDPE [wt%/wt%] | PP-graft-PPDL [wt%] |
| 1 | 2 | 35.1 | 56.8 | PP500P | 2008TN00 | 77/18 | 5 |
| 2 | 2 | 40.6 | 79.0 | PP500P | 2008TN00 | 77/18 | 5 |
| 3 | 2 | 32.0 | 59.6 | PP500P | 2008TN00 | 77/18 | 5 |
| 4 | 2 | 70.8 | 181.2 | PP500P | 2008TN00 | 77/18 | 5 |
| 5 | 2 | 75.4 | 146.2 | PP500P | 2008TN00 | 77/18 | 5 |
| 6 | 2 | 29.7 | 58.7 | PP500P | 2008TN00 | 77/18 | 5 |
| 7 | 2 | 90.1 | 176.8 | PP500P | 2008TN00 | 77/18 | 5 |
| 8 | 2 | 115.1 | 232.7 | PP500P | 2008TN00 | 77/18 | 5 |
| 9 | 2 | 79.8 | 156.0 | PP500P | 2008TN00 | 77/18 | 5 |
| 10 | 2 | 54.9 | 123.0 | PP500P | 2008TN00 | 77/18 | 5 |

### Synthesis of Mg(BHT)₂(THF)₂catalyst 1.

In the glovebox, 2,6-di-tert-butyl-4-methylphenol (BHT, 4.40 g, 20 mmol) was introduced into Schlenk glass and dissolved in dry tetrahydrofuran (30 mL). The mixture was cooled down to 0°C in an ice bath. Subsequently *n*-Bu₂Mg (3.89 ml of 1M solution in hexane, 20 mmol of *n*-Bu₂Mg) was added to BHT solution in THF and stirred at room temperature for 24h under nitrogen atmosphere. The solvent was removed under reduced pressure. A white powder was rinsed with dry heptane (3 × 15 mL) and dried under reduced pressure. Yield: 4.41 g (73.3%).

*Synthesis of aluminum-salpen catalyst 2.* N,N'-bis(salicylidene)-2,2-dimethyl-1,3-propanediamine (2.0 g, 5.7 mmol) was suspended in toluene (30 mL) under N₂ flow. Subsequently, Al(CH₃)₃ (2 M solution in toluene, 2.85 mL, 5.7 mmol) was added via syringe and the mixture was stirred at room temperature for 1h. The thus obtained solution was concentrated to half the original volume and pale yellow crystals of 2 were isolated with a yield of 88 %.

Foaming experiments were performed on a lab scale foaming unit consisting on an 11mm co-rotating twin screw extruder for melting the polymer composition and injection of the physical foaming agent iso-butane. The outlet of the extruder is directly fed into a static mixer consisting of three zones (entrance zone, mixer zone and tool zone) for further mixing the foaming agent with the molten polymer composition and controlling of the temperature. The amount of polymer composition fed to the extruder was 290 g/h and the amount of iso-butane that was dosed in the extruder was kept at a constant value of 28,4 g/hr. At the start of the experiment the mixer and tool zone temperatures were set at 200°C. During the experiments the temperatures of the mixer and tool zones were lowered in steps of 5 - 10 °C each time allowing five minutes for stabilisation of the process at each temperature setting. Once the temperatures were stabilised the tool zone pressure was set at 30 bars by adjusting the opening of the die. Initial settings of the foaming unit are per the Table 3 below.

**Table 3**

| | | | |
|---|---|---|---|
| Extruder | Screwspeed | [rpm] | 75 |
| | T1 | °C | 80 |
| | T2 | °C | 160 |
| | T3 | °C | 210 |
| | T4 | °C | 210 |
| | T5 | °C | 210 |
| | T6 | °C | 210 |
| | T7 | °C | 210 |
| | T8 | °C | 210 |
| Static mixer | T_entrance | °C | 200 |
| | T_mixer | °C | 200 |
| | T_Tool | °C | 200 |
| | P_Tool | Bar | 30 |
| Foaming die | Temperature | °C | 200 |

T1 - T8 are the temperatures of the sections 1-8 of the extruder.

Figure 2 shows the density of the foams based on:
PP500 (-x-)
PP500/LDPE compatibilised by PP-graft-PPDL copolymer (-•-); The material of Table 2, entry 5 was used.

### Daploy WB140 (-▲-)

The horizontal axis shows the temperature of the foaming die, while the veritcal axis shows the density of the foamed material. The curves essentially show that compositions as disclosed herein can indeed be foamed.

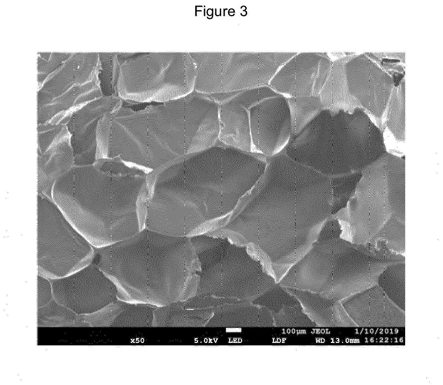

Figure 3 shows SEM analysis of the foam based on the materials of Table 2, entry 5. The pictures show that the cell walls are predominantly continuous meaning that the foam is predominantly a closed cell foam.

## Claims

1. Use of a composition comprising
- 60 - 98 wt.% of polypropylene
- 2 - 40 wt.% of low density polyethylene
- 0.1 - 10 wt.% of compatibiliser
wherein
- the compatibiliser is a BAB or AB type of block copolymer comprising a polypropylene block A and a polyester block B, or wherein the compatibiliser is a graft copolymer of the type ABn having a polypropylene backbone A and polyester block(s) B grafted thereon, with n being at least 1, and
- the polyester block(s) B have an average M/F ratio from 8 - 32, wherein M is the number of backbone carbon atoms in the polyester not including carbonyl carbon atoms, and F is the number of ester groups in the polyester block(s),
- wherein the wt.% is based on the sum of the amount polypropylene, low density polyethylene and compatibiliser,
for the manufacture of a foamed article.

2. The use of claim 1 wherein the M/F ratio is at least 10, preferably from 12 - 24.

3. The use of claim 1 or 2 wherein the amount of compatibiliser is from 1 - 8 wt.%.

4. The use of any one or more of claims 1-3 wherein in the compatibiliser the block B is a polyester obtained by the ring opening polymerisation of cyclic ethylene brassylate, dodecalactone, tridecanolactone, tetradecalactone, pentadecalactone, hexadecalactone, heptadecalactone, octadecalactone, nonadecalactone, ambrettolide, globalide.

5. The use of any one or more of claims 1-4 wherein in the compatibiliser the polypropylene block A or backbone A is a propylene homopolymer or a random propylene and ethylene or C₄ - C₈ alpha olefin copolymer containing at most 5 wt.%, on the basis of the weight of the block or backbone, of ethylene or C₄ - C₈ alpha olefin.

6. The use of any one or more of claims 1-5 wherein the polypropylene is a propylene homopolymer or a random propylene and ethylene or C₄-C₈ alpha olefin copolymer containing at most 5 wt.%, on the basis of the weight of the polypropylene, of said ethylene or a C₄ - C₈ alpha olefin.

7. The use of any one or more of claims 1 - 6 wherein the amount of polypropylene is at least 70 wt.%, preferably at least 75 wt.% and the amount of low density polyethylene is from 5 - 20 wt.% preferably from 10 - 20 wt.%.

8. The use of any one or more of claims 1 - 7 for the manufacture of a foamed article having a percentage of closed cells of at least 50%, preferably at least 75% as determined in accordance with ASTM D2856.

9. The use of any one or more of claims 1 - 8 wherein the foamed article has a degree of expansion of from 1.05 - 40, preferably from 5 - 40, more preferably from 10 - 30, wherein the degree of expansion is defined as the ratio between the density of the composition in molded state prior to foaming and the density of the foamed composition after foaming.

10. A foamed article comprising or consisting of the composition as defined in any one or more of claims 1 - 7 and optionally residues of a chemical or physical foaming agent.

11. A method for the manufacture of a foamed article comprising the steps of
i) providing a composition comprising
- 60 - 98 wt.% of polypropylene
- 2 - 40 wt.% of low density polyethylene
- 0.1 - 10 wt.% of compatibiliser
wherein
- the compatibiliser is a BAB or AB type of block copolymer comprising a polypropylene block A and a polyester block B, or wherein the compatibiliser is a graft copolymer of the type ABn having a polypropylene backbone A and polyester B grafted thereon, with n being at least 1, and
- the polyester block(s) have an average M/F ratio from 8 - 32, wherein M is the number of backbone carbon atoms in the polyester not including carbonyl carbon atoms, and F is the number of ester groups in the polyester block(s) wherein the wt.% is based on the sum of the amount polypropylene, low density polyethylene and compatibiliser,
ii) adding to said composition a physical or chemical foaming agent
iii) foaming the composition of step ii into a foamed article

12. The method of claim 11 wherein the foaming agent is added to the composition in an extruder and is mixed with the composition in molten state.

13. The method of claim 11 or 12 wherein the blowing agent is
- a physical foaming agent and wherein the foamed article is a obtained by extruding the composition through a die, or
- a chemical foaming agent and wherein the foamed article is obtained by first molding the composition of step ii) into a unfoamed intermediate article, followed by a step of foaming said unfoamed intermediate.

14. The use of any one or more of claims 1 - 10 or the method of any one or more of claims 11- 13 wherein the foamed article is a foamed sheet, foamed packaging element, or foamed insulation element.

15. Composition comprising
- 60 - 98 wt.% of polypropylene
- 2 - 40 wt.% of low density polyethylene
- 0.1 - 10 wt.% of compatibiliser
- physical or chemical foaming agent
wherein
- the compatibiliser is a BAB or AB type of block copolymer comprising a polypropylene block A and a polyester block B, or wherein the compatibiliser is a graft copolymer of the type ABn having a polypropylene backbone A and polyester block(s) B grafted thereon, with n being at least 1, and
- the polyester block(s) B have an average M/F ratio from 2 - 25, wherein M is the number of backbone carbon atoms in the polyester not including carbonyl carbon atoms, and F is the number of ester groups in the polyester block(s)
- wherein the wt.% is based on the sum of the amount polypropylene, low density polyethylene and compatibiliser.

## Patentansprüche

1. Verwendung einer Zusammensetzung, die Folgendes umfasst:
- 60 bis 98 Gew.-% Polypropylen,
- 2 bis 40 Gew.-% Polyethylen niedriger Dichte,
- 0,1 bis 10 Gew.-% Kompatibilisator,
wobei
- der Kompatibilisator ein Blockcopolymer vom Typ BAB oder AB ist, das einen Polypropylenblock A und einen Polyesterblock B umfasst, oder wobei der Kompatibilisator ein Pfropfcopolymer vom Typ ABn mit einer Polypropylenhauptkette A und einem oder mehreren darauf gepfropften Polyesterblöcken B ist, wobei n mindestens 1 ist, und
- der eine oder die mehreren Polyesterblöcke B ein durchschnittliches M/F-Verhältnis von 8 bis 32 aufweisen, wobei M die Anzahl der Gerüstkohlenstoffatome in dem Polyester ohne die Carbonylkohlenstoffatome ist und F die Anzahl der Estergruppen in dem einen oder den mehreren Polyesterblöcken ist,
- wobei sich die Gew.-% auf die Summe der Menge an Polypropylen, Polyethylen niedriger Dichte und Kompatibilisator beziehen,
für die Herstellung eines geschäumten Artikels.

2. Verwendung nach Anspruch 1, wobei das M/F-Verhältnis mindestens 10, vorzugsweise 12 bis 24, beträgt.

3. Verwendung nach Anspruch 1 oder 2, wobei die Menge an Kompatibilisator 1 bis 8 Gew.-% beträgt.

4. Verwendung nach einem oder mehreren der Ansprüche 1 bis 3, wobei der Block B im Kompatibilisator ein Polyester ist, der durch Ringöffnungspolymerisation von cyclischem Ethylenbrassylat, Dodecalacton, Tridecanolacton, Tetradecalacton, Pentadecalacton, Hexadecalacton, Heptadecalacton, Octadecalacton, Nonadecalacton, Ambrettolid, Globalid erhalten wird.

5. Verwendung nach einem oder mehreren der Ansprüche 1 bis 4, wobei in dem Kompatibilisator der Polypropylenblock A oder die Hauptkette A ein Propylenhomopolymer oder ein statistisches Propylen- und Ethylen- oder C4-C8-alpha-Olefin-Copolymer ist, das höchstens 5 Gew.-%, bezogen auf das Gewicht des Blocks oder der Hauptkette, an Ethylen oder C4-C8-alpha-Olefin enthält.

6. Verwendung nach einem oder mehreren der Ansprüche 1 bis 5, wobei das Polypropylen ein Propylen-Homopolymer oder ein statistisches Propylen- und Ethylen- oder C4-C8-alpha-Olefin-Copolymer ist, das höchstens 5 Gew.-%, bezogen auf das Gewicht des Polypropylens, des Ethylens oder eines C4-C8-alpha-Olefins enthält.

7. Verwendung nach einem oder mehreren der Ansprüche 1 bis 6, wobei die Menge an Polypropylen mindestens 70 Gew.-%, vorzugsweise mindestens 75 Gew.-% beträgt und die Menge an Polyethylen niedriger Dichte 5 bis 20 Gew.-%, vorzugsweise 10 bis 20 Gew.-%, beträgt.

8. Verwendung nach einem oder mehreren der Ansprüche 1 bis 7 zur Herstellung eines geschäumten Gegenstands mit einem Prozentsatz geschlossener Zellen von mindestens 50 %, vorzugsweise mindestens 75 %, bestimmt nach ASTM D2856.

9. Verwendung nach einem oder mehreren der Ansprüche 1 bis 8, wobei der geschäumte Gegenstand einen Expansionsgrad von 1,05 bis 40, vorzugsweise von 5 bis 40, besonders bevorzugt von 10 bis 30 aufweist, wobei der Expansionsgrad als das Verhältnis zwischen der Dichte der Zusammensetzung im geformten Zustand vor dem Schäumen und der Dichte der geschäumten Zusammensetzung nach dem Schäumen definiert ist.

10. Geschäumter Gegenstand, der die in einem oder mehreren der Ansprüche 1 bis 7 definierte Zusammensetzung und optional Reste eines chemischen oder physikalischen Schaümungsmittels umfasst oder daraus besteht.

11. Verfahren zur Herstellung eines geschäumten Gegenstandes, das folgende Schritte umfasst:
i) Bereitstellen einer Zusammensetzung, die Folgendes umfasst:
- 60 bis 98 Gew.-% Polypropylen
- 2 bis 40 Gew.-% Polyethylen niedriger Dichte
- 0,1 bis 10 Gew.-% Kompatibilisator
wobei
- der Kompatibilisator ein Blockcopolymer vom Typ BAB oder AB ist, das einen Polypropylenblock A und einen Polyesterblock B umfasst, oder wobei der Kompatibilisator ein Pfropfcopolymer vom Typ ABn mit einer Polypropylenhauptkette A und einem darauf gepfropften Polyester B ist, wobei n mindestens 1 ist, und
- der eine oder die mehreren Polyesterblöcke B ein durchschnittliches M/F-Verhältnis von 8 bis 32 aufweisen, wobei M die Anzahl der Gerüstkohlenstoffatome in dem Polyester ohne die Carbonylkohlenstoffatome ist und F die Anzahl der Estergruppen in dem einen oder den mehreren Polyesterblöcken ist,
wobei sich die Gew.-% auf die Summe der Menge an Polypropylen, Polyethylen niedriger Dichte und Kompatibilisator beziehen,
II) Zugeben eines physikalischen oder chemischen Schäumungsmittels zu der Zusammensetzung
III) Aufschäumen der Zusammensetzung aus Schritt ii zu einem geschäumten Gegenstand

12. Verfahren nach Anspruch 11, wobei das Treibmittel der Zusammensetzung in einem Extruder zugesetzt und mit der Zusammensetzung im geschmolzenen Zustand vermischt wird.

13. Verfahren nach Anspruch 11 oder 12, wobei das Treibmittel
- ein physikalisches Schaümungsmittelist und wobei der geschäumte Gegenstand durch Extrudieren der Zusammensetzung durch eine Düse erhalten wird, oder
- ein chemisches Schaümungsmittelist und wobei der geschäumte Gegenstand dadurch erhalten wird, dass zunächst die Zusammensetzung aus Schritt ii) zu einem ungeschäumten Zwischenerzeugnis geformt wird, gefolgt von einem Schritt des Aufschäumens des ungeschäumten Zwischenerzeugnisses.

14. Verwendung nach einem oder mehreren der Ansprüche 1 bis 10 oder Verfahren nach einem oder mehreren der Ansprüche 11 bis 13, wobei der geschäumte Gegenstand eine geschäumte Folie, ein geschäumtes Verpackungselement oder ein geschäumtes Isolierelement ist.

15. Zusammensetzung, die Folgendes umfasst:
- 60 bis 98 Gew.-% Polypropylen,
- 2 bis 40 Gew.-% Polyethylen niedriger Dichte,
- 0,1 bis 10 Gew.-% Kompatibilisator,
- physikalisches oder chemisches Schäumungsmittel,
wobei
- der Kompatibilisator ein Blockcopolymer vom Typ BAB oder AB ist, das einen Polypropylenblock A und einen Polyesterblock B umfasst, oder wobei der Kompatibilisator ein Pfropfcopolymer vom Typ ABn mit einer Polypropylenhauptkette A und einem oder mehreren darauf gepfropften Polyesterblöcken B ist, wobei n mindestens 1 ist, und
- der eine oder die mehreren Polyesterblöcke B ein durchschnittliches M/F-Verhältnis von 2 bis 25 aufweisen, wobei M die Anzahl der Gerüstkohlenstoffatome in dem Polyester ohne die Carbonylkohlenstoffatome ist und F die Anzahl der Estergruppen in dem einen oder den mehreren Polyesterblöcken ist,
- wobei sich die Gew.-% auf die Summe der Menge an Polypropylen, Polyethylen niedriger Dichte und Kompatibilisator beziehen.

## Revendications

1. Utilisation d'une composition comprenant
- 60 à 98 % en poids de polypropylène
- 2 à 40 % en poids de polyéthylène basse densité
- 0,1 à 10 % en poids de compatibilisant
dans laquelle
- le compatibilisant est un copolymère à blocs de type BAB ou AB comprenant un bloc polypropylène A et un bloc polyester B, ou dans laquelle le compatibilisant est un copolymère greffé de type ABn à squelette polypropylène A et un ou plusieurs blocs polyester B greffés dessus, n étant au moins égal à 1, et
- l'un ou plusieurs blocs polyester B ont un rapport M/F moyen de 8 à 32, dans laquelle M est le nombre d'atomes de carbone du squelette dans le polyester n'incluant pas les atomes de carbone carbonyle, et F est le nombre de groupes ester dans l'un ou plusieurs blocs polyester,
- dans laquelle le % en poids est basé sur la somme de la quantité de polypropylène, de polyéthylène basse densité et de compatibilisant,
pour la fabrication d'un article moussé.

2. Utilisation selon la revendication 1, dans laquelle le rapport M/F est d'au moins 10, de préférence de 12 à 24.

3. Utilisation selon la revendication 1 ou 2, dans laquelle la quantité de compatibilisant est de 1 à 8 % en poids.

4. Utilisation selon l'une quelconque ou plusieurs des revendications 1 à 3, dans laquelle, dans le compatibilisant, le bloc B est un polyester obtenu par la polymérisation par ouverture de cycle de brassylate d'éthylène cyclique, de dodécalactone, de tridécanolactone, de tétradécalactone, de pentadécalactone, d'hexadécalactone, d'heptadécalactone, d'octadécalactone, de nonadécalactone, d'ambrettolide, de globalide.

5. Utilisation selon l'une quelconque ou plusieurs des revendications 1 à 4, dans laquelle, dans le compatibilisant, le bloc de polypropylène A ou le squelette A est un homopolymère de propylène ou un copolymère statistique de propylène et d'éthylène ou d'alpha-oléfine en C₄-C₈ contenant au plus 5 % en poids, sur la base du poids du bloc ou squelette, d'éthylène ou d'alpha-oléfine en C₄-C₈.

6. Utilisation selon l'une quelconque ou plusieurs des revendications 1 à 5, dans laquelle le polypropylène est un homopolymère de propylène ou un copolymère statistique de propylène et d'éthylène ou d'alpha-oléfine en C₄-C₈ contenant au plus 5 % en poids, sur la base du poids du polypropylène, dudit éthylène ou d'une alpha-oléfine en C₄-C₈.

7. Utilisation selon l'une quelconque ou plusieurs des revendications 1 à 6, dans laquelle la quantité de polypropylène est d'au moins 70 % en poids, de préférence d'au moins 75 % en poids et la quantité de polyéthylène basse densité est de 5 à 20 % en poids, de préférence de 10 à 20% en poids

8. Utilisation selon l'une quelconque ou plusieurs des revendications 1 à 7 pour la fabrication d'un article moussé ayant un pourcentage de cellules fermées d'au moins 50 %, de préférence d'au moins 75 % tel que déterminé conformément à la norme ASTM D2856.

9. Utilisation selon l'une quelconque ou plusieurs des revendications 1 à 8, dans laquelle l'article moussé a un degré d'expansion de 1,05 à 40, de préférence de 5 à 40, plus préférablement de 10 à 30, dans laquelle le degré d'expansion est défini comme le rapport entre la densité de la composition à l'état moulé avant moussage et la densité de la composition moussée après moussage.

10. Article moussé comprenant ou consistant en la composition telle que définie selon l'une quelconque ou plusieurs des revendications 1 à 7 et éventuellement des résidus d'un agent moussant chimique ou physique.

11. Procédé de fabrication d'un article moussé comprenant les étapes consistant à
i) fournir une composition comprenant
- 60 à 98 % en poids de polypropylène
- 2 à 40 % en poids de polyéthylène basse densité
- 0,1 à 10 % en poids de compatibilisant
dans lequel
- le compatibilisant est un copolymère à blocs de type BAB ou AB comprenant un bloc polypropylène A et un bloc polyester B, ou dans lequel le compatibilisant est un copolymère greffé de type ABn sur lequel est greffé un squelette polypropylène A et polyester B, n étant au moins égal à 1, et
- l'un ou plusieurs blocs polyester ont un rapport M/F moyen de 8 à 32, dans lequel M est le nombre d'atomes de carbone du squelette dans le polyester n'incluant pas les atomes de carbone carbonyle, et F est le nombre de groupes ester dans l'un ou plusieurs blocs polyester
dans lequel le % en poids est basé sur la somme de la quantité de polypropylène, de polyéthylène basse densité et de compatibilisant,
ii) ajouter à ladite composition un agent moussant physique ou chimique
iii) faire mousser la composition de l'étape ii en un article moussé

12. Procédé selon la revendication 11 dans lequel l'agent moussant est ajouté à la composition dans une extrudeuse et est mélangé avec la composition à l'état fondu.

13. Procédé selon la revendication 11 ou 12, dans lequel l'agent gonflant est
- un agent moussant physique et dans lequel l'article moussé est obtenu en extradant la composition à travers une filière, ou
- un agent moussant chimique et dans lequel l'article moussé est obtenu en moulant d'abord la composition de l'étape ii) en un article intermédiaire non moussé, suivi d'une étape de moussage dudit article intermédiaire non moussé.

14. Utilisation selon l'une quelconque ou plusieurs des revendications 1 à 10 ou procédé selon l'une quelconque ou plusieurs des revendications 11 à 13, dans lequel l'article moussé est une feuille moussé, un élément d'emballage moussé ou un élément d'isolation moussé.

15. Composition comprenant
- 60 à 98 % en poids de polypropylène
- 2 à 40 % en poids de polyéthylène basse densité
- 0,1 à 10 % en poids de compatibilisant
- un agent moussant physique ou chimique
dans laquelle
- le compatibilisant est un copolymère à blocs de type BAB ou AB comprenant un bloc polypropylène A et un bloc polyester B, ou dans lequel le compatibilisant est un copolymère greffé de type ABn ayant un squelette polypropylène A et un ou plusieurs blocs polyester B greffés dessus, n étant au moins égal à 1, et
- l'un ou plusieurs blocs polyester B ont un rapport M/F moyen de 2 à 25, dans lequel M est le nombre d'atomes de carbone du squelette dans le polyester n'incluant pas les atomes de carbone carbonyle, et F est le nombre de groupes ester dans l'un ou plusieurs blocs polyester
- dans lequel le % en poids est basé sur la somme de la quantité de polypropylène, de polyéthylène basse densité et de compatibilisant.
